# EUROPEAN PATENT APPLICATION

(11) **EP 3 462 430 A1**
(43) Date of publication of application: **03.04.2019**
(21) Application number: 17382648.8
(22) Date of filing: 29.09.2017
(51) Int. Cl.: G08G 5/00

(54) **SYSTEM AND METHOD FOR COMMUNICATING HIGH FIDELITY AIRCRAFT TRAJECTORY-RELATED INFORMATION THROUGH STANDARD AIRCRAFT TRAJECTORY CONVENTIONS**

(71) Applicant: The Boeing Company, Chicago, IL 60606-2016 (US)
(72) Inventor: VALLS HERNANDEZ, ERNESTO, 28042 MADRID (ES); NAVARRO FELIX, FRANCISCO A., 28042 MADRID (ES); QUEREJETA MASAVEU, CARLOS, 28042 MADRID (ES); CUADRADO SANCHEZ, JESUS, 28042 MADRID (ES)
(74) Representative: Carvajal y Urquijo, Isabel

(57) **Abstract**

A computer-implemented method and a system for communicating high fidelity (HIFI) trajectory-related information of an aerial vehicle (AV) through standard aircraft trajectory conventions is disclosed. The method comprises the steps of: obtaining, from a first entity, a flight intent (300) containing low fidelity (LOFI) trajectory-related information; obtaining intent generation (IG) configuration parameters (301) defining constraints and/or objectives supplementary to the flight intent (300), containing HIFI trajectory-related information for closing all degrees of freedom of the AV's motion and configuration; encoding, using standard aircraft trajectory conventions, LOFI trajectory-related information from the flight intent (300) and IG configuration parameters (301) as a flight plan (305) and user-defined fields (306) available for information exchange; sending, to a second entity, the flight plan (305) and user-defined fields (306).

## Description

### FIELD

The present disclosure generally teaches techniques related to exchange of detailed trajectory-related information expressed using a formal language through standard trajectory recipes.

### BACKGROUND

An aircraft intent expressed in a formal language also referred to as Aircraft Intent Description Language (AIDL), provides an unambiguous description of an aircraft's intended motion and configuration during a period of flight. The aircraft intent description is usually derived from flight intent.

A flight intent contains more-basic information regarding how the aircraft is to be flown and does not provide enough information to allow an unambiguous determination of aircraft trajectory. Flight intent may be thought of as a generalization of the concept of a flight plan, and so will reflect operational constraints and objectives such as an intended or required route and operator preferences. Generally, flight intent will not unambiguously define an aircraft's trajectory, as it is likely to contain only some of the information necessary to close all degrees of freedom. Put another way, there are likely to be many aircraft trajectories that could be calculated that would satisfy a given flight intent. Thus, flight intent may be regarded as a basic blueprint for a flight, but that lacks the specific details required to compute unambiguously a trajectory. Thus, additional information must be combined with the flight intent to derive the aircraft intent that does allow an unambiguous prediction of the four-dimensional trajectory to be flown.

In this regard, Aircraft Intent Description Language (AIDL) is a technology that allows the path of an aircraft to be predicted unambiguously. It may be defined as a rigorous formal method to describe the recipe which univocally determines an aerial vehicle trajectory (i.e. aircraft intent). AIDL is intended to support advanced automation in the operation of aerial vehicles. AIDL is a structured and formal language that provides the mechanisms to formulate aircraft intent, which, in the context of trajectory prediction, refers to the information that unambiguously describes how the aircraft is to be operated within a certain time interval.

By expressing aircraft intent according to the AIDL, it is ensured that each instance of aircraft intent defines a unique trajectory for each atmospheric scenario (i.e. given the four-dimensional pressure, temperature and wind fields within which the flight would take place). Consequently, it is considered to support hi-fidelity (HIFI) trajectory definition.

AIDL provides the set of instructions (alphabet) and the rules (grammar) that govern the allowable combinations that express the aircraft intent, and so allow a prediction of the aircraft trajectory. The definition of the alphabet and the grammar rules are based on a mathematical analysis of the trajectory computation process applying the theory of Differential Algebraic Equations. Originally, AIDL was conceived within the Air Traffic Management (ATM) domain to enhance predictability and accuracy on the aircraft trajectory execution in order to facilitate a higher level of automation and autonomy.

Besides ATM, AIDL may potentially be applied to other areas. In the particular, the continuous evolution in the field of UAS will imply new challenges and difficulties. In this way, it is expected that future requirements relating to trajectory specifications and automation will be established considering a proper interoperation with legacy systems and existing standard trajectory definition methods (e.g. STANAG-4586).

On the other side, current and legacy ATM solutions use standard but low fidelity trajectory definitions in the sense that they cannot describe unambiguously how an aircraft is to be operated within a certain time interval. Thus, aircraft trajectory conventions like those established by ARINC 702A, TCAS/ACAS X CPDLC, ASTERIX, ADS-B and STANAG-4586 are regarded as low-fidelity (LOFI) trajectory definitions.

In this disclosure, the term "LOFI" is to be understood as the not enough trajectory-related information to determinate unambiguously the trajectory that will be flown by the aircraft. A LOFI trajectory will not unambiguously define an aircraft's trajectory due to the fact that it does not contain the necessary information to close all degrees of freedom. Put another way, there are likely to be many aircraft trajectories that would satisfy a given LOFI trajectory. Thus, a LOFI trajectory may be regarded as a basic blueprint for a flight, but that lacks the specific details required to compute unambiguously a trajectory. "HIFI" is to be understood as the enough trajectory-related information to predict unambiguously the trajectory that will be flown by the aircraft. Thus a HIFI trajectory must be able to capture the necessary and sufficient information to allow a unique aircraft intent to be determined and thus a unique trajectory.

### SUMMARY

The present disclosure was made in view of the situation described before. Emerging and future implementations of communication systems are expected to provide more details to determine an AV trajectory, whereas existing standard formats and legacy Air/Ground (A/G), Air/Air (A/A) and Ground/Ground (G/G) communications systems were originally conceived to support limited exchange of trajectory information (e.g. using less data or a narrow broad band).

An aspect of the present disclosure is to provide an implementation to enable the use of Aircraft Intent Description Language (AIDL), which enables hi-fidelity (HIFI) trajectory definitions. AIDL-based technology helps to attain higher levels of automation and autonomy. This implementation will confer several benefits like a better fidelity of aircraft trajectory planning, prediction and control, obtaining unique levels of trajectory synchronization between airborne and ground systems (e.g. respectively autopilots and Ground Control Stations or GCS) as well as between Unmanned Aerial Systems (UAS) instances and Air Traffic Control (ATC).

The implementation of AIDL would also allow a safe separation of aircrafts in congested airspace such as around airports. Trajectory interoperability and synchronization across trajectory-based tools for modeling, optimization, de-confliction, etc. can also benefit of the present disclosure. It may bring unique Autopilot-GCS as well as UAS-ATC trajectory synchronization performance, which benefits mission QoS, flight contingency management and UAS-ATM integration.

Advantageously, the present approach may reduce integration time and life cycle costs. Exchanging HIFI trajectory definitions through existing standards taking advantage of legacy networking architectures and common communication solutions allows for code reuse and seamless integration. The alternative is developing a brand-new approach to HIFI trajectory exchange, which would need to be widely accepted and adopted by the aviation community, which results quite unlikely.

Another aspect of the present disclosure is to provide a method and a system capable of preserving compatibility and interoperability among heterogeneous technologies. Thus, it prevents that an intrusive change in entities using existing standards or protocols for trajectory definition may occur.

A further aspect of the present disclosure is to reduce datalink requirements in communications. The present disclosure proposes the exchange of HIFI trajectory definitions (e.g. based on AIDL) embedded into standard (lower-fidelity) ones. The actual exchange of trajectory information reduces to its low-fidelity (standard) representation along with, possibly, a set of intent generation configuration parameters, which, imply minimum impact in the communication bandwidth.

The greater level of detail embodied in the HIFI trajectory definition is never exposed over the communication datalink.

As result, the present approach improves security without significantly impacting requirements on communication bandwidth. The ability to synchronize full AIDL trajectory definitions and take advantage of them on both sides of the communication pipeline without actually exposing AIDL helps protecting Company's IP and the competitive advantages associated with the AIDL technology.

The present disclosure teaches exchange AIDL trajectory definitions embedded into standard trajectory definitions and exchange formats by means of:
- automatically generating the aircraft intent on both ends, transmitter and receiver, of the communication pipeline, and
- synchronizing a set of intent generation (IG) configuration parameters that allow replicating the same aircraft intent generation process used on the transmitter side at the receiver side, via a combination of conventions and explicit information exchange using the mechanisms that such exchange methods provide (e.g. user-defined fields).

The development of these techniques will lead to benefits, not only for airlines and other stakeholders but also for passengers and UAV users. Advantageous embodiments of the method and system are described in more detail in subsequent sections. The features, functions, and advantages of the present disclosure can be achieved independently in various embodiments or may be combined in yet other embodiments further details of which can be seen with reference to the following description and drawings.

### BRIEF DESCRIPTION OF THE DRAWINGS

A series of drawings, which aid in better understanding the disclosure and which are presented as non-limiting examples, are very briefly described below.
FIG. **1** illustrates AIDL trajectory definition embedded into standard trajectory definitions to be exchanged through legacy communication systems.
FIG. **2** illustrates a high-level block diagram of the architecture associated with the disclosed teachings.
FIG. **3** illustrates a high-level block diagram in which information under different formats is organized, encoded and decoded to be exchanged over legacy systems.
FIG. **4** illustrates a particular platform for UAS and its ground control station (GCS).
FIG. **5** illustrates three different scenarios for exchanging trajectories in UAS domain.
FIG. **6** illustrates an example of cooperative collision avoidance.
FIG. **7** illustrates an example of surveillance for a UAV in a loss of link situation.
FIG. **8** illustrates integration of conventional air traffic with UAV traffic using existing legacy infrastructure.
FIG. **9** shows an example of information encompassed by a LOFI trajectory definition using NATO STANAG-4586.
FIG. **10** illustrates a schematic of representation a LOFI flight plan in STANAG-4586.
FIG. **11** illustrates an AIDL-like representation captured by a LOFI flight plan in STANAG-4586.
FIG. **12** illustrates a trajectory life-cycle.
FIG. **13** graphically illustrates a schematic 4D trajectory according to a STANAG-4586 flight plan.
FIG. **14** illustrates uncertainties in a 2D lateral path.
FIG. **15** illustrates an AIDL representation of the lateral path model.
FIG. **16A** graphically illustrates several remaining uncertainties in a 2D lateral path.
FIG. **16B** illustrates a sequence of ortodromic segments (i) of a 2D lateral path in LOFI according to AIDL.
FIG. **17** illustrates a sequence of ortodromic segments (ii) of a 2D lateral path in LOFI according to AIDL.
FIG. **18** graphically illustrates a 2D lateral path implementing fly-by and fly-over according to a first method.
FIG. **19A** graphically illustrates a 2D lateral path with a sequence of ORTO and CIRC legs in HIFI according to AIDL.
FIG. **19B** illustrates a sequence of ORTO and CIRC legs of a 2D lateral path in HIFI according to AIDL.
FIG. **20** graphically illustrates an implementation of class-2 continuity adaption according to a second method.
FIG. **21A** graphically illustrates a lateral path with a sequence of ORTO and J-CIRC-J legs.
FIG. **21B** illustrates a sequence of ORTO and J-CIRC-J legs of a lateral path in HIFI according to AIDL.
FIG. **22** illustrates an AIDL bridge with several levels.
FIG. **23** illustrates an AIDL representation of the vertical path model.
FIG. **24** graphically illustrates uncertainty associated with a missing longitudinal instruction.
FIG. **25A** graphically illustrates an AIDL representation of the longitudinal profile model.
FIG. **25B** illustrates a vertical profile in AIDL.
FIG. **26** illustrates an AIDL representation of the propulsive profile model.
FIG. **27A** graphically illustrates a propulsive profile of speed/throttle vs. time.

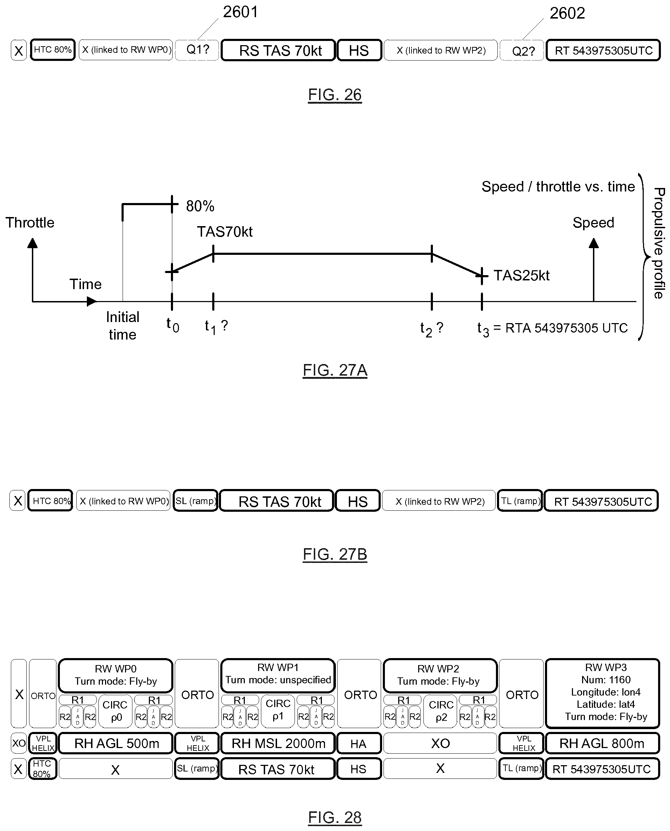

FIG. **27A** illustrates an AIDL representation in terms of speed/throttle vs. time.
FIG. **28** illustrates an AIDL aircraft intent model.

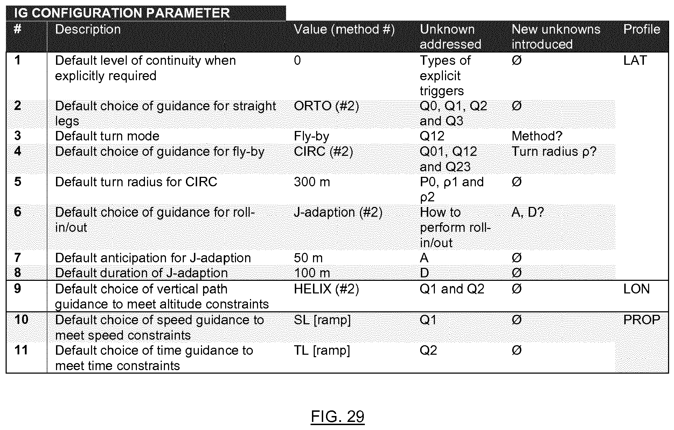

FIG. **29** is a summary table of IG configuration parameters.

### DETAILED DESCRIPTION

Various embodiments illustrate embedding high-fidelity trajectory definitions into low fidelity and standard trajectory definitions.

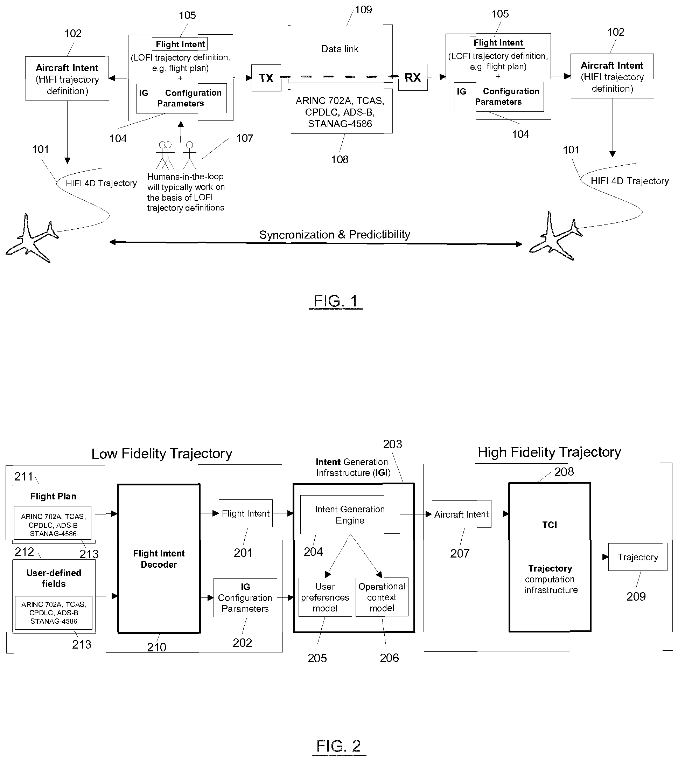

**FIG. 1** shows how full AIDL trajectory definition may be embedded into low fidelity (LOFI) standard trajectory definitions **108** and exchanged through legacy/current communication systems using data communication link **109** that only support these standards as exchange formats.

Human operators **107** (e.g. pilots, air traffic controllers and designated UAS operators) typically work on the basis of LOFI trajectory definitions **108** (flight plans) that do not usually determine the AV motion unambiguously.

In most cases, LOFI standard trajectory definitions **108** may be represented as and directly mapped to the notion of "flight intent" **105.** Generally, a flight intent **105** contains trajectory-related information that does not necessarily univocally determine the AV motion, but instead usually incorporates a set of high-level requirements (typically in the form of some sort of conditions and constrains) that define certain aspects that the AV should respect during its motion (e. g. following a certain route, keeping a fixed speed in a certain area).

Normally, a flight intent **105** contains flight segments already augmented by constraints or objectives, for example as already provided by an operator when defining the original flight intent as part of mission plan or the like. However, the operator **107** may enter additional information as intent generation (IG) configuration parameters **104.**

These operational objectives and constraints that must be fulfilled by the trajectory are for example: preferred route, operator preferences such as cost-index, standard operational procedures, air traffic management constraints, etc. According to the information that is used directly to generate and augment the flight intent 105, it is possible to group similar elements into two separate types of information: operational and context/user preferences.

IG configuration parameters **104** may be defined as the set of operational and context/user preferences expressed in the way of constraints and objectives that are not contained into the original flight intent **105.** IG configuration parameters **104** are optional. A user is free to opt for the use of additional requirements or not.

If the flight intent **105** needs to be supplemented with enough information to allow an aircraft intent to be determined and thus a unique trajectory, a set of standard auto-completion conventions is needed. To this aim, an intent generation infrastructure (IGI) may be used as FIG. 2 shows. One example of a system and method for implementing IGI is disclosed in US 8,798,813 B2, although other methods could be equivalently applied.

In case of using STANAG 4586, the lateral path of an intended trajectory is defined as a set of waypoints, which define a particular mission to be performed by an AV. In order to express such mission in terms of aircraft intent (which can be expressed with AIDL) it is necessary to completely determine the trajectory in a mathematical sense. This includes determining how all the motion control degrees of freedom and, in particular, the lateral motion, are managed in continuous time all over the time interval covered by the AIDL expression. Thus, it involves defining exactly how the AV is going to fly between each waypoint, for instance, through ortodromic lines between waypoints connected by fly-by circular arcs of given turn radius. Such information, which is not contained in the flight plan based on STANAG 4586, shall typically be specified by the user by means of IG configuration parameters **104.**

**FIG. 2** shows a high-level representation of several aspects regarding how an intent generation engine **204** uses a flight intent **201,** user preferences model **205** and operational context model **206** to provide an aircraft intent **207** as its output. IG configuration parameters **202** may also be an additional input to the intent generation infrastructure (IGI) **203.** IG configuration parameters **202** determine (configure) how the user preferences model **205** and/or the operational context model **206** specifically work.

In order to compute the trajectory **209,** a trajectory computation infrastructure (TCI) **208** requires as input the aircraft intent **207** previously generated. US 2010/0305781 A1 discloses a proposal for implementing the trajectory computation infrastructure **208.** The aircraft intent provides a HIFI trajectory definition with enough information to predict unambiguously the trajectory that will be flown by the AV.

Flight intent decoder **210** uses as LOFI standard trajectory definition a flight plan **211** and user-defined fields **212** to produce a flight intent **201** and IG configuration parameters **202.**

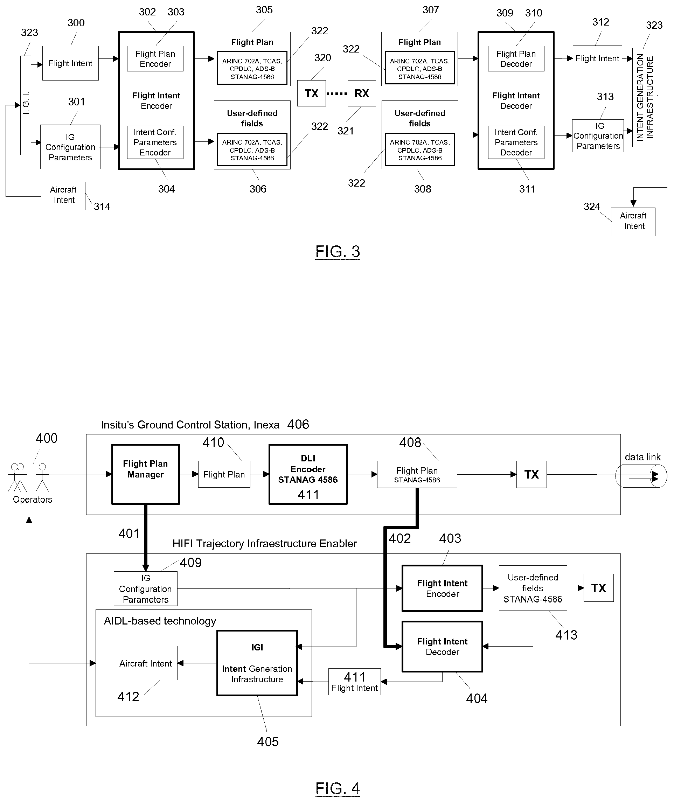

**FIG. 3** illustrates how information is encoded and decoded in specific formats in current and legacy systems to allow working with HIFI and LOFI trajectories definitions.

A flight intent encoder **302** comprises a flight plan encoder **303** and an IG configuration parameters encoder **304.** The flight plan encoder **303** translates a flight intent **300** into a flight plan **305** under a specific format (see LOFI standard trajectory definitions **108** in FIG. 1). IG configuration parameters encoder **304** converts IG configuration parameters **301** into user-defined fields **306** provided by the different standard exchange formats available in the conventional flight plan protocol **108** (e.g. in STANAG 4586 custom user-defined messages may be exchanged by means of private messages). The aircraft intent **102** that was sent may be retrieved through the data communication link **109,** by decoding **110** both flight intent **111** and IG configuration parameters **112** from their corresponding standard trajectory definition and exchange format. Flight intent decoder **309** comprises a flight plan decoder **310** and an IG configuration parameters decoder **311.**

Optionally, IG configuration parameters **301** and the flight intent **300** can be generated from an aircraft intent **314** via an IGI **323** on the transmitting side. Likewise on the receiving side, IGI **323** can recreate an aircraft intent **324** from the recovered the flight intent **313** and configuration parameters **312.**

Therefore, now referring back to FIG. **1****,** both the sender and the receiver must have the same aircraft intent **102** and the same HIFI trajectory representation **101,** without having to expose full AIDL trajectory details. Simply flight plans **211** and user-defined fields **212** are exchanged though standard LOFI trajectory definitions. This solution enables an easy way to interoperate with HIFI trajectories definitions within current and modern ATM/UAS initiatives and legacy systems, allowing the path of an aircraft to be defined and predicted unambiguously and therefore bringing unique synchronization among different systems that share the same trajectory definition.

**FIG. 4** illustrates an example of how an embodiment may interoperate with legacy systems without an intrusive change and how it may enable the use of AIDL-based technology and its integration with minor to no modification to existing systems. This example deals with the integration and interoperability with a particular platform for UAS and its ground control station (GCS) called Inexa™ **406,** designed by the Boeing subsidiary Insitu Company. Inexa **406** gives operators tools to control UAS while staying compliant with emerging regulations.

Using the different modules described in the present disclosure, like flight intent encoder **403,** flight intent decoder **404,** IGI **405,** it is possible to set up an adaptive, flexible architecture to enable AIDL-based technology on the existing Insitu's GCS. Only two interactions may suffice to enable the employment of AIDL-based technology:
- A first reception **401** of IG configuration parameters **409** introduced by operators **400** when planning a route (e.g. it can be carried out by means of an Inexa plugin).
- A second reception **402** of the resulting flight plan encoded in STANAG 4586 format **408** (it might be implemented as an Inexa plugin **411** or by means of an external application listening the network).

Advantageously, the proposed architecture is not intrusive; operators **400** may work on LOFI flight plans **410** as usual ignoring the new capabilities provided by the AIDL-based technology.

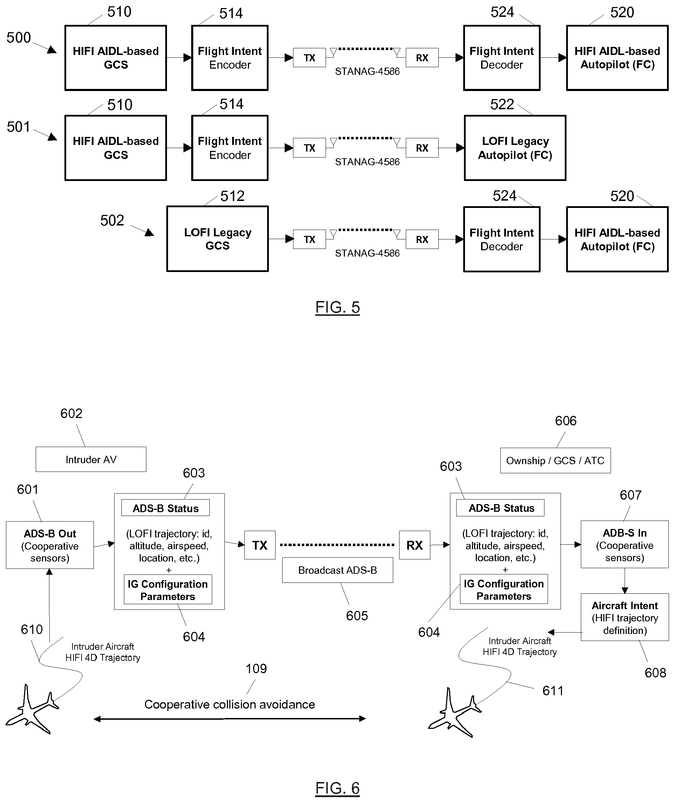

**FIG. 5** illustrates how the present disclosure may interoperate in UAS domain via a flexible architecture with different legacy and future systems in diverse scenarios **500, 501,502.**

In the first scenario **500,** both GCS **510** and Autopilot **520** work on HIFI AIDL-based trajectories and exchange trajectories definitions through the existing conventions and standards. A method for controlling a UAV in the present scenario may comprise the following steps:
1. Creating high fidelity (AIDL) flight trajectory-related information that may be composed of low fidelity flight plan (that is directly mapped to STANAG-4586) and IG configuration parameters.
2. Transmitting low fidelity flight plan and IG configuration parameters via flight intent encoder **514.**
3. Receiving low fidelity flight plan and IG configuration parameters via flight intent decoder **524.**
4. Generating high fidelity (AIDL) trajectory using a processor configured to perform with low fidelity flight plan and IG configuration parameters as input (One example of a method for implementing IGI is disclosed in US 8,798,813 B2).
5. Transmitting high fidelity (AIDL) trajectory-related information to UAV
6. Controlling UAV using high fidelity (AIDL) trajectory-related information (aircraft intent) through a trajectory computation infrastructure TCI (One example of a trajectory computation infrastructure is disclosed in US 2010/3005781 A1)

In the second scenario **501,** GCS **510** works on HIFI AIDL trajectories and exchanges standard trajectories definitions with legacy autopilots **522** that only support LOFI trajectories (e.g. a planned route using STANAG-4586). A method for controlling a UAV in the present scenario may comprise the following steps:
1. Creating high fidelity (AIDL) trajectory-related information that may be composed of low fidelity flight plan (that is directly mapped to STANAG-4586) and IG configuration parameters.
2. Transmitting low fidelity flight plan and IG configuration parameters via flight intent encoder **514.**
3. Receiving low fidelity flight plan. IG configuration parameters will be ignored.
4. Transmitting only low fidelity flight plan to UAV. A LOFI Legacy Autopilot will not support IG configuration parameters.
5. Controlling UAV using low fidelity flight plan

In the third scenario **502,** a modern HIFI autopilot **520** with an AIDL-based flight control is controlled by a legacy GCS **512** that operates with STANAG-4586. A method for controlling a UAV in the present scenario may comprise the following steps:
1. Creating a low fidelity flight plan comprising a list of waypoints.
2. Transmitting low fidelity flight plan.
3. Receiving low fidelity flight plan via flight intent decoder **524.**
4. Generating high fidelity (AIDL) trajectory-related information using a processor configured to perform with low fidelity flight plan and IG configuration parameters as input. In the present scenario the IG configuration parameters will not be able to be received from the data link, however might be determined based on full set of conventions adopted off-line.
5. Transmitting high fidelity (AIDL) trajectory to UAV.
6. Controlling UAV using high fidelity (AIDL) trajectory-related information (aircraft intent) through a trajectory computation infrastructure TCI (One example of a trajectory computation infrastructure is disclosed in US 2010/3005781 A1).

The last scenario is particularly instructive; it serves to illustrate how to exchange aircraft intent ignoring the need of IG configuration parameters (e.g. based on a full set of conventions adopted off-line).

**FIG. 6** illustrates an AIDL trajectory (HIFI) definition exchanged through ADS-B communication systems **605** that may be applied in trajectory de-confliction & collision avoidance of AVs in case of an intruder AV **602.**

The intruder AV **602** equipped with the ABS-B system is capable of sharing its current trajectory within cooperative sensors of ADS-B-Out **601.** Thus, an onboard transmitter periodically broadcasts status information **603,** such as identification, current position, altitude, heading, and velocity. This AV status information **603** represents a LOFI trajectory definition and may be enriched by using IG configuration parameters 604 to become HIFI. On the other side, a second entity, in this example a nearby AV **606** (but also applicable to CGS or ATC) may recover HIFI intended trajectory as follows. The intruder AV **602** broadcasts a LOFI trajectory definition of its intended trajectory along with IG configuration parameters **604** via ADS-B/out limited bandwidth using legacy trajectory description methods (e.g. ARINC 424). The nearby AV **606** receives the LOFI trajectory **603** and associated IG configuration parameters **604** from the intruder AV **602** via ADS-B/in **607.** The nearby AV **606** can then produce an intruder's aircraft intent **608** and thus be aware of intruder's HIFI intended trajectory **611.** As a result, predicted trajectories for both intruder AV **602** and nearby AV **606** can be compared to identify potential loss of separation (LoS) with less false and missed alerts expected than doing so based on LOFI trajectories. Consequently, the nearby AV **606** may generate a HIFI collision avoidance maneuver that addresses the LoS identified.

What is more, the nearby AV **606** may eventually execute a HIFI description of the collision avoidance maneuver that effectively addresses the identified LoS. Thus both AVs, nearby AV **606** and the intruder AV **602,** may coordinately and cooperatively maneuver to avoid the LoS throughout techniques based on the exchange of LOFI trajectories that can be turned into HIFI ones at both sides of a limited bandwith communication channel.

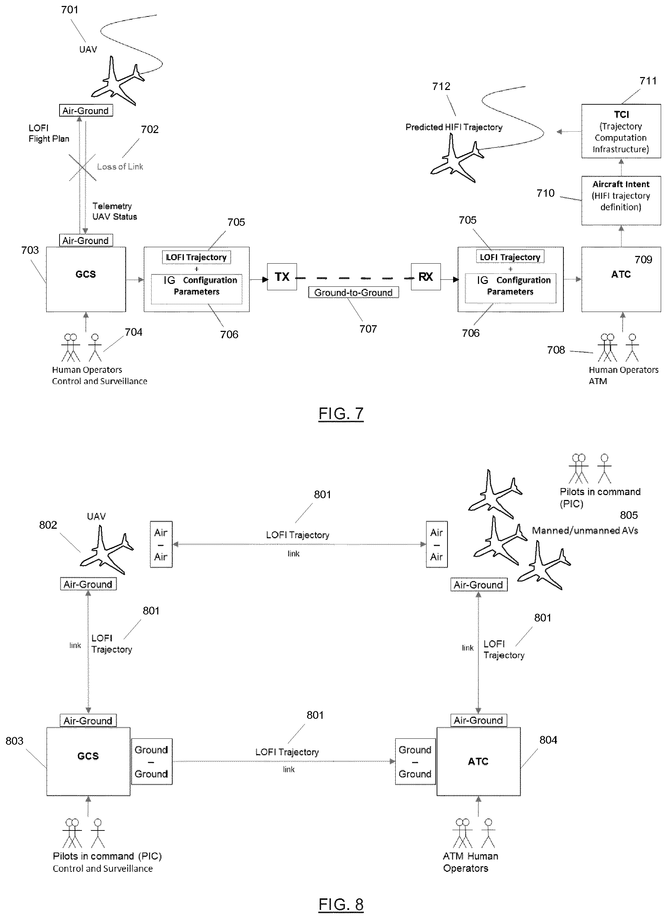

**FIG. 7** depicts surveillance of UAV trajectories in a Loss-of-Link (LoL) situation. This example serves to illustrate how a HIFI trajectory definition (AIDL) may be exchanged through existing Ground-to-Ground communication **707** between GCS **703** and ATC **709** for surveillance purposes.

Specifically, if, as result of a failure (i.e. loss of up/downlinks communication between GCS **703** and UAV **701**), the human operators **704** in charge of control and surveillance cannot communicate with the UAV **201.** HIFI AIDL trajectory followed by the UAV **701** may be sent through the existing ground-to-ground data communication link **707** from the GCS **703** to the ATC **709,** encoding both the LOFI trajectory definition **705,** and the IG configuration parameters **706** into the standard trajectory definition and exchange formats that are being used by GCS **703** and ATC **709.**

This approach enables the ATC **709** be notified in case of LoL **702** or when some failures occur affecting surveillance. By means of a trajectory computation infrastructure (TCI) **711** as taught in US 2010/0305781 A1, using the generated aircraft intent **710** along with the last position known prior to LoL **702,** human operators **708** in charge of ATM may unambiguously calculate with enough accuracy the UAV predicted HIFI trajectory **712.**

As a result, operators may effectively plan safe paths for others AVs located close to the danger area. Thus, in order to reduce as much as possible damage to people and infrastructures, operators may create new contingency routes that can also be safe-crash points for the UAV termination if no recovery actions are possible.

**FIG. 8** illustrates the current ATM situation where all the main agents implied, namely UAVs **802,** Manned/unnamed AVs **805,** GCS **803** and ATC **804,** are exchanging some kind of LOFI trajectory definition **801.** Yet HIFI trajectory definitions may also be exchanged through existing standards, and thus facilitating the integration and compatibility of UAVs into future ATM systems as well as a transition to AIDL-based technology to attain higher automation and better fidelity of aircraft trajectory prediction and control.

This approach may benefit the adoption of HIFI trajectory definitions through existing standards and current conventions improving synchronization between UAS instances and ATC.

### Definition of IG configuration parameters throughout the Intent generation process

The following discussion explains how the intent generation (IG) configuration parameters are determined through the generation process of a HIFI trajectory in AIDL from a LOFI flight plan using NATO STANAG-4586.

According to the STANAG 4586, an AV flight plan is made by one or more routes, each of them composed by a sequence of waypoints (WPs). Routes, in particular, represent the AV path in a 4D space having the waypoints as vertexes. Fourth dimension is specified assigning speed or temporal constraints to selected WPs. At a given time, the AV is following an active route.

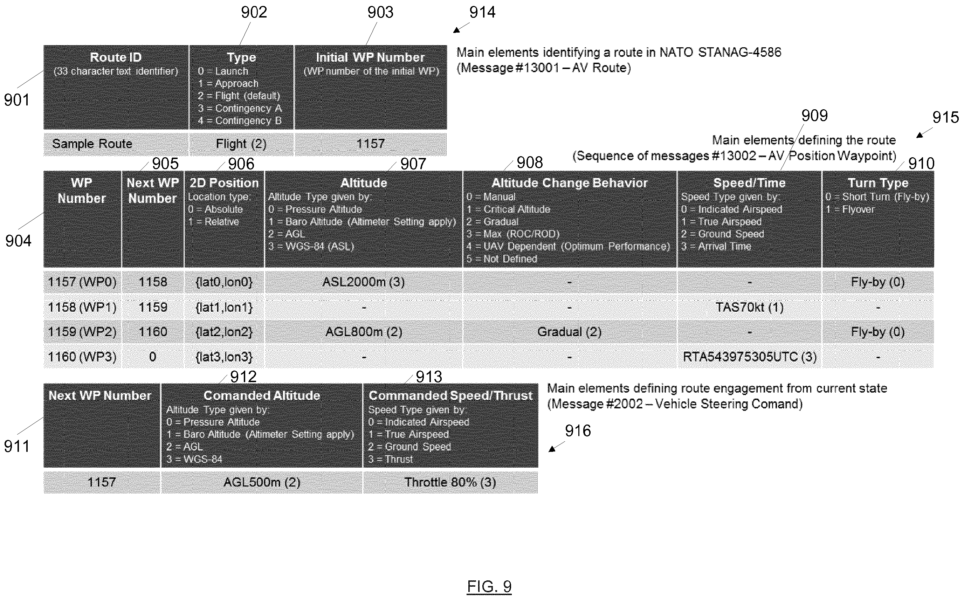

**FIG. 9** illustrates information related to the LOFI Trajectory definition in a flight plan of a particular route **901,** namely "Sample Route" based on NATO STANAG-4586. In particular messages #13001 **914** and #13002 **915** are used along with message #2002 **916** regarding AV steering command that instructs the engagement of such route from current AV state.

Waypoints are the essential trajectory description primitive of STANAG-4586 mission/flight plan protocol. Waypoints may be defined as 2D/3D/4D points that can contain the following information:
- *Waypoint Number* **903***,* **905** which is a univocal identifier.
- *2D Position* **906** in terms of geodetic {latitude, longitude} referred to WGS-84 or, alternatively, cartesian {X, Y} coordinates with respect to a relative local Cartesian reference frame.
- *Altitude* **907** in terms of either pressure/baro altitude or height; in the latter case it can be referred to either Mean Sea Level (MSL), i.e. Above Sea Level (ASL), or the local ground as Above Ground Level (AGL). It is important to highlight that altitude as constraint captured by STANAG-4586 as part of a given WP definition does actually apply to the next WP of the sequence, except if the *Altitude Change Behavior* **908** attribute is set to *Critical Altitude,* in which case a whole spiral up/down flight pattern is inserted at the given WP to ensure altitude adaption locally at such WP.

- *Speed*/*Time **908***: Regarding speed, it is typically relative to wind (airspeed), in terms of Indicated Air Speed (IAS) or True Air Speed (TAS), or absolute speed referred to the ground, i.e. Ground Speed (GS). Regarding time: typically a Required Time of Arrival (RTA) to the waypoint referred to UTC (Universal Time Coordinated) time reference.
- *Turn type **910***: short turn (i.e. Fly-By) or Fly-Over (i.e. fly-through).
- *Next WP number **905, 911***: WP number of the next WP in the (route) WP sequence.

The WP number **903, 905** is used as univocal identifier and it is the key that permits to build the routes. WP number ranges from 1 to 65535. "0" indicates the end-of-route. As a minimum, WP number and 2D position must be given for each WP designed as part of the route, which outlines the lateral path of the route. Further information such as the turn mode can be optionally provided at each WP to capture more detail about the lateral path. Also, further requirements such as altitude **907** and/or speed/time **909** constraints can optionally be associated with each waypoint to capture some high-level details about the longitudinal and propulsive profiles, respectively addressing 3^{rd}-dimensional and 4^{th}-dimensional aspects of the AV motion.

A second primitive considered by STANAG-4586 is the so-called *loiter waypoint,* which essentially can represent either a circle of constant radius also referred to as a *Circular Loiter,* a hippodrome also referred to as a *Racetrack Loiter,* depending on the specific parameters that define the loiter pattern. For each loiter waypoint, it is possible to define a *Radius,* the turn *Direction,* and the *Loiter Time;* it is also possible for the Racetrack to define a *Length* and a *Bearing.* All loiter patterns are intended at constant altitude (the altitude of the approaching leg) and speed (speed can be specified for the loiter pattern). This example defines a simple route in a flight plan using STANAG-4586, as a sequence of four 2D waypoints numbers **904:** 1157 (WP0), 1158 (WP1), 1159 (WP2) and 1160 (WP3), including constraints over the aforementioned waypoints, such as altitude **907** reached at the next waypoints number **905** (500m, 2000m and 800m), speed/time **909** constraints (e.g. TAS 70kt and RTA543975305UTC) and the turn type 910 (in the example, all turns are prescribed as *fly-by,* except turn at WP1, which is left unspecified). The sample trajectory model also includes the route engagement leg from current AV position at the time that the route is activated (NAV-TO).

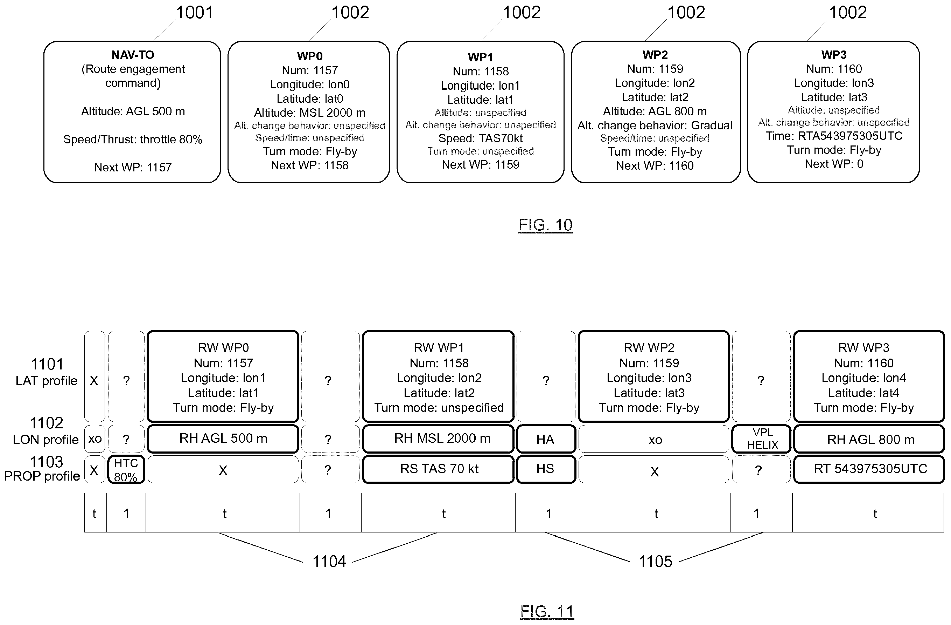

**FIG. 10** illustrates a LOFI model of the flight plan made in terms of STANAG-4586. Basically, it comprises a route engagement command **1001** followed by a sequence of waypoints **1002,** each including longitude and latitude as a minimum plus, possibly, the additional information that capture altitude and/or speed/time and/or turn mode constraints.

**FIG. 11** illustrates how the information captured by the LOFI STANAG-4586 flight plan may be expressed and modeled by means of the AIDL. The illustrated model may be considered as the AIDL flight intent derived from the STANAG-4586 trajectory description, however it does not determine a unique trajectory and therefore an aircraft intent. The dashed boxes show all ambiguities and uncertainties that have to be resolved in order to be considered an aircraft intent. Regarding to AIDL, the information captured by each STANAG-4586 command is decomposed as it pertains to the three motion profiles, namely lateral, longitudinal and propulsive associated with the 3 degrees of freedom (DOF) of the AV motion.

Unlike STANAG-4586, AIDL defines AV trajectory in terms of sequences called *threads* of *triggers* (t) **1104** and *instructions* (i) **1105,** which are the essential AIDL primitives. Triggers **1104** and instructions **1105** are specific to each of the three motion profiles **1101, 1102, 1103,** which respectively define how the 3 DOF of the AV motion are determined over time.

Triggers **1104** may determine either specific aspects of the motion at a given time (*restrictive triggers*) or the time at which certain aspect of interest of the motion reaches a value (*inspective triggers*)*.* Triggers **1104** can also determine a specific time in the motion history based on events that are external to the profile that they belong to (*explicit triggers*), which enables linking such point in time to *extrinsic* events (e.g. mission/PL events, ATC or PIC interventions) as well as linking/triggering behavioral changes across the different motion profiles. For instance, initial triggers **1104** in the sequence named with an "X" for eXplicit, as they are all linked to the moment that the pilot in command (PIC) issues the route engagement command. When the time instant inherent to a trigger arrives, the trigger is said to have happened (or have been met), which terminates the active instruction that precedes the trigger in the corresponding profile and activates the one that follows it. Thus, triggers **1104** represent the essential *sequence control* mechanism that administers how the guidance and control references that determine each DOF of the AV motion are sequenced over time. On the other hand, instructions mathematically determine the nature of such control and guidance references (*effect*). Triggers **1104** and instructions **1105** have specific *signatures* that govern which alternate sequences of them are considered legal (*thread-level lexicon*).

Although not illustrated in FIG. **11****,** the same approach also applies to all additional threads. That is to say, other than the three ones that describe the three motion profiles **1101, 1102, 1103** are needed to describe how the *AV configuration* aspects, such as landing gear, high-lift devices, speed brackets, reference altitude or any other should be handled over time.

Syntax rules govern which simultaneous combinations of either triggers **1104** or instructions **1105** are compatible. By appropriately sequencing triggers **1104** and instructions **1105** in all applicable profiles **1101, 1102, 1103** and linking triggers **1104** conveniently one can build AIDL trajectory models with arbitrary level of detail (i.e. both LOFI and HIFI).

As previously introduced, when all triggers **1104** and instructions **1105** present in an AIDL trajectory model are completely defined, i.e. no trigger or instruction or any parameter that defines them (if they are parametric) remains unknown, the AIDL model is said to define *aircraft intent*(HIFI), otherwise, it is said to define *flight intent*(LOFI)*.* Thus, aircraft intent captures the necessary and sufficient information that completely and univocally determines the AV motion with a certain level of detail. As such, given an instance of aircraft intent, for each set of *initial conditions, AV response*/*performances* and *atmospheric scenario* there is a unique possible *AV motion* that such aircraft intent instance gives rise to (i.e. determines). In strict AIDL terminology, the term *trajectory* is reserved for the notion of AV motion, i.e. the temporal evolution of the AV state over the state-space, i.e. the trajectory in the mathematical sense from Control Theory (AV state as a function of time).

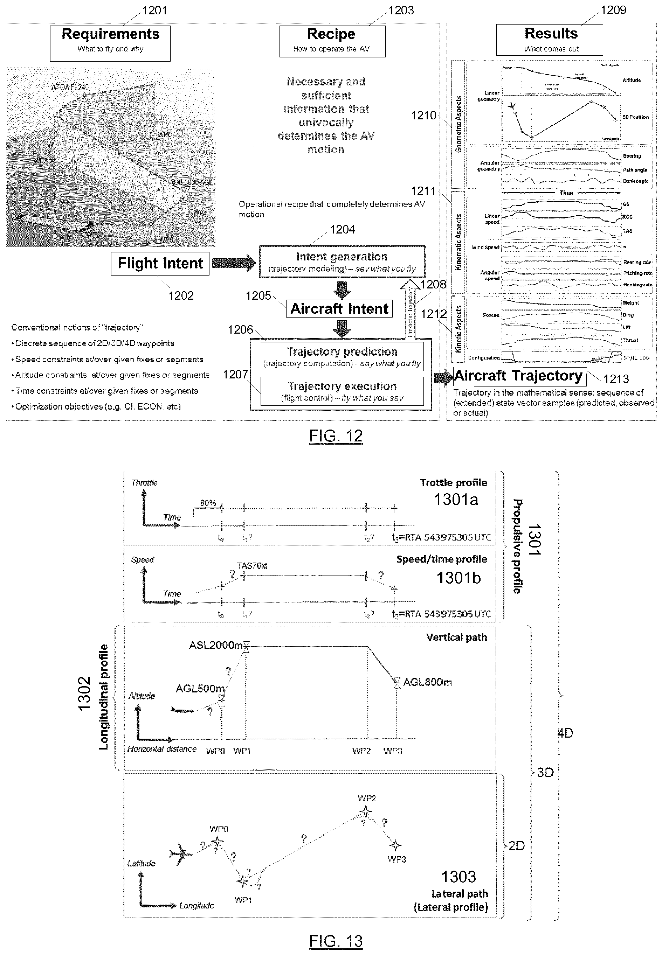

**FIG. 12** illustrates how the AV trajectory life cycle may look like, as well as what intent generation and IG parameters and configuration parameters may consist upon. Requirements **1201** provide information about what to fly and why. This normally includes a discrete sequence of 2D/3D/4D waypoints, speed constraints and time constraints at/over given fixes or segments, optimization of objectives, etc. in the form of flight intent **1202.** Recipe **1203** provides additional information about how to operate the AV. Intent generation **1204** uses flight intent **1202** to obtain aircraft intent **1205.** Trajectory prediction **1206** may serve to enhance intent generation **1204** via a predicted trajectory **1208.**

AV motion or AV trajectory only becomes evident according to either the trajectory execution **1207** of an aircraft intent recipe **1203** by a given AV in a given atmospheric scenario starting from a given initial state (the so-called actual trajectory) or by a trajectory prediction **1206** where the actual AV response/performances and atmospheric scenario are replaced by respective models representing them (the so-called predicted trajectory). The unicity of aircraft intent **1205** (recipe **1203**) in determining the AV trajectory (result **1209**) stands for certain given initial conditions, AV and atmospheric scenario. Should any of those three elements vary, a different result **1209** (i.e. a different aircraft trajectory **1213**) would be obtained for even the same aircraft intent recipe **1203.** On the contrary, in principle, many results might be obtained from a flight intent instance, even if the initial conditions, AV and atmospheric scenario remain unchanged, as what flight intent **1202** captures is trajectory requirements **1201** to a higher or lesser extent, but not to the extent that the guidance, control and AV configuration recipe **1203** gets unambiguously determined.

Precisely, what the process of intent generation (IG) **1204** does is solve the ambiguities and uncertainties about the recipe **1203** that still exist at flight intent **1202** level. In general, such process is complex, as it requires making reasonable guesses and assumptions to fill in the gaps based on operational knowledge, as well as, perhaps, performing parametric optimizations supported by an underlying trajectory prediction **1206** capability that also serves to validate the aircraft intent recipe **1203** being formulated. However, regardless its complexity, the ultimate objective of the IG **1204** process is to find out a set of parameters that allow the completion of the missing information in the flight intent **1202** so as to turn it into aircraft intent **1205.** Such parameters may, for instance, designate specific choices of instructions or triggers out of the AIDL *alphabet* that are suitable to complete missing information. Other examples of such parameters include those needed to specify details related to certain given trigger or instruction that are still missing (the so-called specifiers), such as, for instance, the turn radius in a constant radius turn that may have been chosen as the method to implement the fly-by turns.

Consequently, one possibility to reconstruct aircraft intent **1205** from flight intent **1202** is to explicitly share, along with the given flight intent, the corresponding IG parameters generated by a certain IG **1204** capability. This has the advantage that the aircraft intent **1205** is directly obtained from the flight intent **1202** and the companion IG parameters without any need to know how such parameters where obtained, i.e. without the need to share a common IG **1204** capability. But the downside is that, depending of the level of definition of detail in the flight intent **1202,** the number of IG parameters can be considerably high.

On the opposite side, should the exact same IG **1204** capability by means of which the IG parameters were obtained be available, there would be no need to share any IG parameter, as they all could be recreated through repeating the IG **1204** process based on that identical IG capability feed with the same flight intent **1202** as input. However, this time the drawbacks come associated to interoperability issues (not likely that different actors share their IG **1204** capability with others plus there might be actors such as ATC that would need the specific IG capabilities for all the AVs under its responsibility) and/or certifiability issues (e.g. if having to embed the IG capability onboard an AV).

A tradeoff might consist on identifying common assumptions typically made within the IG **1204** process and parameterizing the corresponding IG heuristics in terms of some IG configuration parameters that may relate to default instruction/trigger choices for typical cases that, when shared, would enable replicating the same intent generation process reasonably easily. Then, for most instances of typical cases, there would be no need to recurrently share the same configuration parameter over again, while for the particular cases not covered, the explicit share of IG parameters would be the choice. Moreover, if conventions about which IG configuration parameters to apply are adopted beforehand between the two sides of the communication process intended for trajectory synchronization, there would be no need to further share such parameters. In other words, the more conventional the process of IG **1204** becomes, the lesser the need to explicitly share IG parameters or IG configuration parameters.

Turning to FIG. **11** and the (LOFI) AIDL model above is further discussed illustrated with an example.

AIDL provides restrictive triggers that can directly capture 2D position constraints (RW - Required Waypoint), Altitude (RH - Required Altitude/Height) and Time (RT - Required Time). It has also the ability to capture explicit continuity requirements at given triggers. For instance, let us consider the explicit triggers X that capture the moment in which the PIC issues the steering command to engage the route (NAV-TO). For the lateral **1101** and propulsive profiles **1103,** we have used the basic X trigger, because by, design, AIDL implicitly ensures continuity of class 0 through it for the lateral path (which means continuity of geometry) and continuity of class 1 for the propulsive path (which, in this case, means that the magnitude of the speed is continuous). However, class-0 continuity is not, in general, guaranteed for the longitudinal profile **1102,** which is the reason to explicitly require it denoting the corresponding trigger **1104** as X0. Higher levels of continuity might have explicitly been required for the explicit triggers **1104** (such as X1 or X2), in which case, the ensuing instructions **1105** would need to be coherent with such requirements, thereby enforcing that the model of the NAV-TO piece be of higher fidelity. For the sake of simplicity, it is chosen not to require higher level of continuity, which means, discontinuities are accepted in bearing (lateral profile), path angle (longitudinal profile) and speed direction (propulsive profile). Notice that an identical approach is taken for translating into AIDL (explicit) triggers **1104** of the propulsive profile **1103.** Due to the lack of speed specification of the STANAG-4586 model in WP0 and WP3, the (implicit) continuity of class 1 (magnitude of the speed) is chosen. Similarly in WP1, where the lack of altitude information referring to the next waypoint translates into an explicit trigger X0 associated (linked) to RW WP2, where the choice is to explicitly require class-0 (continuity of vertical geometry).

One first big difference between AIDL and STANAG-4586 is that, by virtue of the higher granularity of AIDL primitives, it allows associating the altitude constraints with the exact waypoint that they apply to. Thus, RH AGL 500 m is associated with the trigger RW WP0. On the other hand, in STANAG-4586 the altitude constraint is captured in the preceding NAV-TO primitive. RH MSL 2000 m is associated with the trigger RW WP1, while in STANAG-4586 such altitude constraint is captured by the preceding WP0 primitive.

A second important difference with AIDL is that STANAG-4586 primitives merge information related to waypoints with information related to the evolution in between waypoints, which represent a time interval. Waypoints in STANAG-4586 only represent a time instant in the AV trajectory. For instance, as shown in FIG. **10****,** in NAV-TO **1001,** the specification of speed through thrust control (throttle setting at 80% of its maximum) implies that such control law will be exerted until the next WP (WP0) is reached.

Using AIDL as shown in FIG. **11****,** the above information can be modelled separately by means of an instruction **1105,** namely instruction HTC (Hold Throttle Control) with the specifier 80%. Likewise, with the STANAG-4586 specification of *Altitude Change Behavior* 2 (Gradual) in WP2 of FIG. 10, which implies that the altitude is controlled so it changes gradually between WP2 and the next waypoint WP3. Whereas AIDL can model this with a Vertical Path Law (VPL) instruction **1105** called HELIX, which essentially provides a guidance law which captures such desired behavior.

A third difference between AIDL and STANAG-4586 as it concerns to the scope of the example being analyzed is that, according to STANAG-4586, when no altitude or speed/time constraints are given at certain WP, it implicitly implies that, respectively, altitude or speed is held between such WP and its next one. In AIDL both guidance laws must be explicitly represented, respectively, by the instructions **1105** Hold Altitude (HA) and Hold Speed (HS).

As shown, the AIDL model of FIG. **8** already captures almost all the information contained in the original STANAG-4586 model, except for the treatment of the *Turn Mode* information that will be explained later. It is important to notice that, after the IG processing, which essentially consists on translating (i.e. parsing) the information contained in the STANAG-4586 primitives into AIDL triggers and instructions of the applicable profiles, no further uncertainty is concerned with the triggers once the continuity criterion for explicit triggers has been set. Such criterion relates to the use of implicit continuity for explicit triggers, except for those in the longitudinal profile, where class 0 continuity is explicitly required. It can be parameterized with just a three-valued number that represents the minimum level of continuity required for explicit triggers (0, 1 or 2), but such parameter is already an important IG configuration parameter, as it conditions the possible choices of missing instructions that can follow explicit triggers.

Despite the above, significant uncertainty remains in the instructions, which, essentially, reflects the fact that STANAG-4586 primitives, in general, convey little information about the specific guidance and control laws that can be applied so that the AV motion fulfils the given position, altitude and speed/time constraints. All such unknown instructions are represented in the AIDL model of FIG. **9** with a question mark, which shows that the model captures flight intent (i.e. trajectory requirements) rather than a concrete aircraft intent recipe of the AV trajectory.

**FIG. 13** graphically shows an intuitive representation of the ambiguities or uncertainties inherent to the AIDL flight intent model derived from the STANAG-4586 trajectory description, particularly when trying to depict a 4D trajectory modeled in a 4D space.

Dashed lines with question marks represents uncertainties STANAG-4586 trajectory description for the propulsive profile **1301** (throttle profile **1301a** and speed/time profile **1301b**), longitudinal profile **1302** and lateral profile **1303.** Due to the limited fidelity of STANAG-4586 trajectory representation, it is not possible to turn these unknown dashed lines of the profiles into concrete continuous ones. In other words, though a discrete number of constraints have been captured, the specific motion of the AV that fulfills such constraints remains largely undetermined. Thus, different GNC (Guidance, Navigation and Control) solutions typically interpret and, thereby, execute the LOFI model in different ways, giving rise to different AV motion histories. For instance, some GNC solutions might choose fly-by as the default solution for the turns for which the turn mode has not been specified while others might choose fly-over. Furthermore, different GNC solutions implement fly-by and fly-over turn modes in different ways. Similar examples can be brought on how different GNC solutions implement dissimilar guidance & control strategies to fulfill altitude and speed/time constraints.

While existing GNC solutions typically do well in the pursue of some sort of optimality, since much of the guidance and control references are implicitly generated on-the-fly, it is hard for third-party actors to accurately predict the 4D trajectories that will result from such LOFI plans. The incomplete HIFI definition of the AV trajectories causes the elements (humans & automation systems) that need to be synchronized must make assumptions and take decisions assuring safety via large *safety buffets* in detriment of other performance aspects such as capacity, efficiency and environmental impact. Also automation is greatly hampered. Thus, the optimality achieved by the GNC solution in virtue of the freedom left by incomplete LOFI trajectory models very often becomes irrelevant in front of the penalties associated with the trajectory amendments needed to ensure safety (e.g. conflict/collision avoidance) or cope with capacity issues (e.g. holding while in-flight or engines on), ultimately derived from the lack of trajectory predictability.

### HIFI trajectory generation

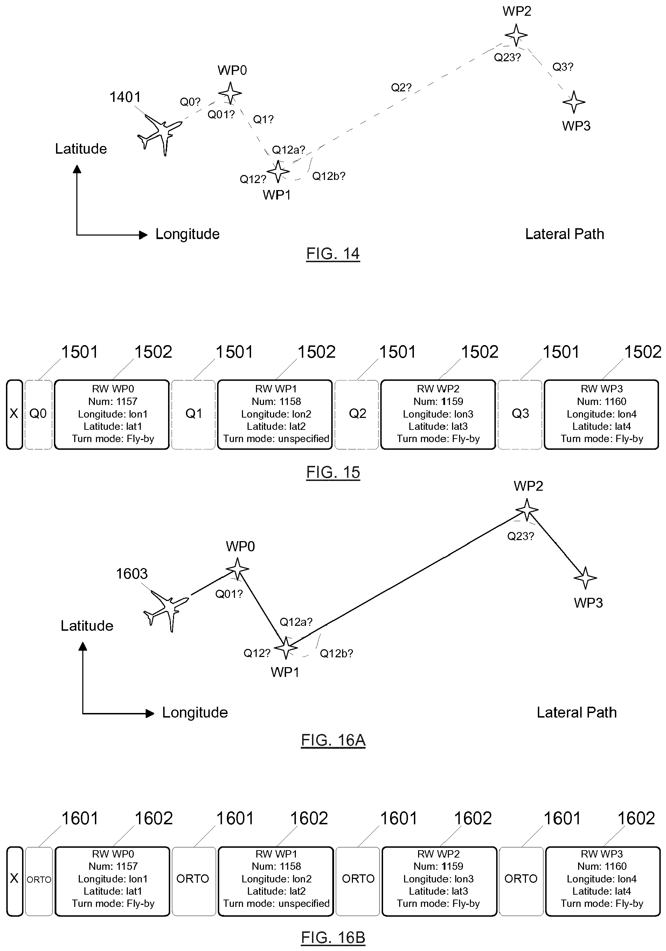

**FIG. 14** is a 2D lateral path according to a LOFI trajectory description that only captures the 2D position of the AV **1401** at a discrete set of reference waypoints encompassed by a 2D route definition, namely WP0-WP3.

There is no information captured that determines the geometry of the trajectory in between each pair of consecutive waypoints, as represented in by uncertainties Q0, Q1, Q2 and Q3). The reference waypoints given are certainly not part of the 2D geometry of the trajectory, for those waypoints for which fly-by turn mode is specified. The exact geometry of the turns remain undescribed, as represented by uncertainties Q1 and Q23. For the waypoints for which the turn mode is unspecified the uncertainty about the 2D geometry of the lateral path results even bigger, which is represented by uncertainty Q12, which when addressed, would still give rise to uncertainties Q12a or Q12b.

**FIG. 15** schematically represents the AIDL model of the 2D lateral path derived from the LOFI STANAG-4586. It reveals the initial gaps that need to be filled in in order to move towards a HIFI model. Parameterized in terms of the parameters **1501** Q0, Q1, Q2 and Q3, such gaps refer to the way of flying the AV in between each pair of consecutive waypoints **1502.**

Q0, Q1, Q2 and 03 are instances **1501** of a certain selection parameter that chooses among possibly different methods to fly the legs in between every consecutive pair of waypoints **1502.** Such a parameter is another IG configuration parameter that can be identified, which helps disambiguating how the 2D path is determined in between waypoints **1502.**

Typically two approaches may be used to control the lateral path in between two consecutive waypoints **1502:**
- A first turn method based on controlling course (the direction of the speed vector) so it points towards the next active waypoint. Once a certain criterion about how such waypoint is considered "met", it is deactivated and the next one in the route is activated and so on and so forth. It may be hard to determine the geometry of the 2D path beforehand, as it would require a good parametric model describing how such control process is performed. For a fixed-wing AV, the control process might include a set of nested PID control loops bank-on-ailerons (with sideslip cancelled by rudder) and course-on-bank, in which case, Q1 would end up being a vector of parameters encompassing the control gains and some key aspects of the AV dynamics needed to model the lateral-directional response of the plant that such control applies to.
- A second turn method based on computing the minimum length curve - i.e. the ortodromic - that connects every two consecutive waypoints **1502.** This second method implies that the lateral motion is controlled against a fixed geometric reference that can be computed (and therefore, determined and synchronized) beforehand.

In sum, another IG configuration parameter can be a binary-valued one allowing the selection between the two methods, with no additional parameters needed in the case that second method and ortodromic approach is always applied.

**FIG. 16A** and **FIG. 16B** show, as example according to the second turn method, how the IG capability may replace previously unknown parameters **1501** Q0, Q1, Q2 and Q3 by corresponding instances of ORTO. More precisely, a so-called ORTO PP or point-to-point in AIDL terminology.

The next question to be answered is how to model turns at each waypoint. In other words, how to address uncertainties associated with parameters **1601** Q1, Q12/Q12a/Q12b and Q13 graphically shown in **FIG. 16A**.

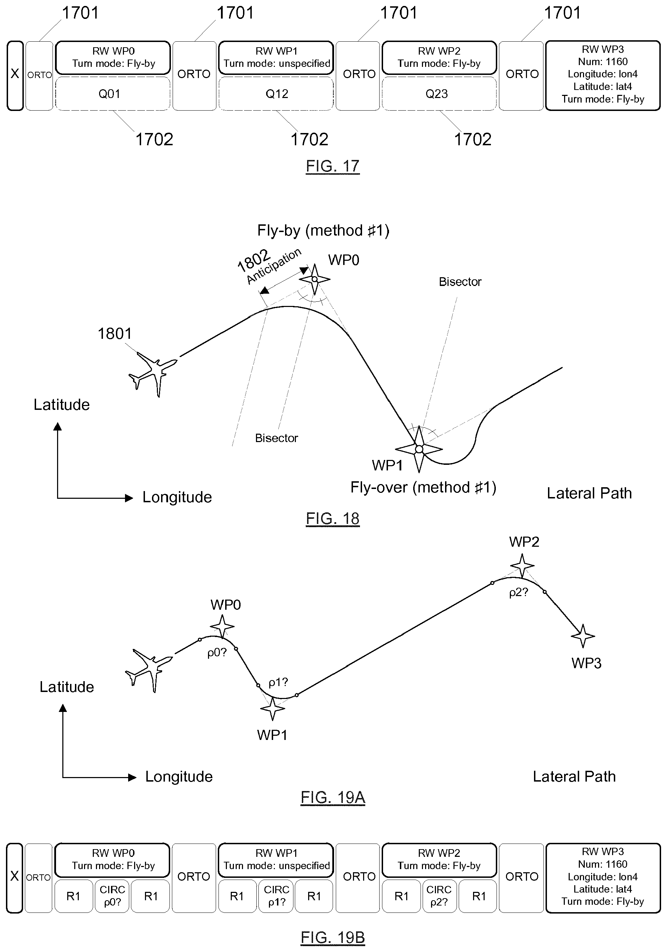

**FIG. 17** shows AIDL LOFI lateral path model as a sequence of ortodromic segments **1701.**

**FIG. 18** graphically shows a lateral path of an AV **1801** according to a first turn method for the implementation of an IG approach for turns where the course is dynamically controlled. If fly-by is set, the next waypoint WP1 is activated before reaching the currently active waypoint WP0 with certain anticipation **1802,** which may be in the form of a distance. Thus, such anticipation **1802** may be another intent configuration parameter. If fly-over is set, the next waypoint WP1 is activated upon reaching the currently active WP0. The next waypoint WP1 may be determined as the current position crosses the bisector of current and next legs by the active waypoint.

**FIG. 19A** graphically shows a lateral path of an AV **1901** according to a second turn method which is only valid for the fly-by option. **FIG. 19B** shows AIDL HIFI representation of the lateral path as a sequence of ORTO and CIRC legs.

Thus, constant radius circle tangent to the inbound and outbound ortodromic legs, such radius being another intent generation configuration parameter. Another IG configuration parameter may be a binary-valued one allowing the selection between the two available turn methods. A further IG configuration parameter may be required to choose the turn mode, should such detail be missed in the LOFI trajectory model.

For convenience, it is assumed that such third IG configuration parameter (Q12) sets fly-by by default and second method, i.e. constant radius turn, is always chosen (Q01, Q12a, Q23) with certain radius (p0, p1, p2), i.e. a further IG configuration parameter set to a default value (e.g. 300 m).

Finally, once the fly-by method of constant radius turn has been selected, the specific roll-in and roll-out maneuvers that need to be performed, respectively, at the beginning and end of the constant radius turn so to ensure bank continuity (or, equivalently, radius of curvature of the lateral path) have to be determined. Again, two possible methods may be used:
- First method: For instance, typical RNAV-capable FMS anticipates a certain distance (dynamically computed as a function of AV speed, wind and turn radius) from the point where the turn circle touches the inbound leg (represented in AIDL as a R1 trigger, which requires class-1 continuity in the lateral geometry, i.e. a tangency condition), at which it initiates banking towards a pre-computed target bank angle that is assumed to fit to the given turn radius given the current local wind; then bank angle is controlled so as for the geometry to follow the circular geometry until a point ahead the exit R1 point, where an inverse banking maneuver is initiated to end up capturing the outbound leg.
- Second method: An alternative method to smooth the otherwise discrete jump in bank (or curvature) that would appear in the R1 points could be using a so-called J-adaption curves; a fixed geometry curve that ensures continuity of curvature in the transition from a straight leg to a circular arc and vice-versa. Again, such an approach has the advantage that the geometry of the adaption curve can be computed beforehand, once that of the legs it fits to is known.

A further IG configuration parameter may be yet another binary-valued one that allows selecting between the two methods explained above. Assuming the J-adaption method is always chosen then a typical implementation of such a method requires, for instance, two additional parameters. Said parameters would be added to the list of IG configuration parameters that define the anticipation (A) **2002** to the R1 point and the duration (D) **2003** of the J segment; let us suppose that A=50m and D=100m.

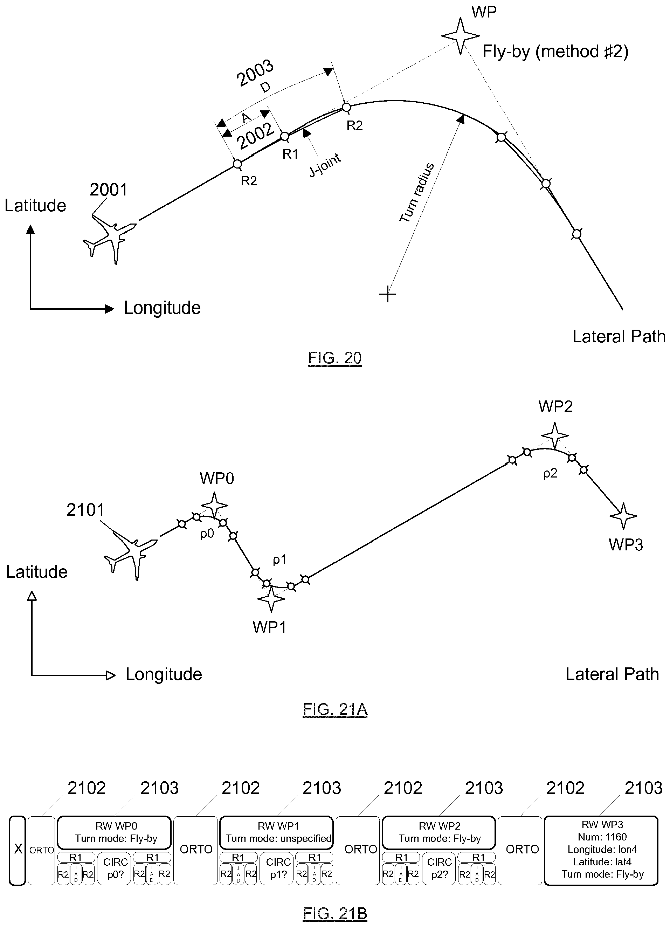

**FIG. 21A** graphically shows a lateral path of an AV **2101.** **FIG. 21** **B** shows an AIDL HIFI representation of the lateral path as a sequence of ORTO and J-CIRC-J legs.

Noticeably, turn models built for every fly-by waypoint **2103** may represent multiple levels of detail simultaneously.

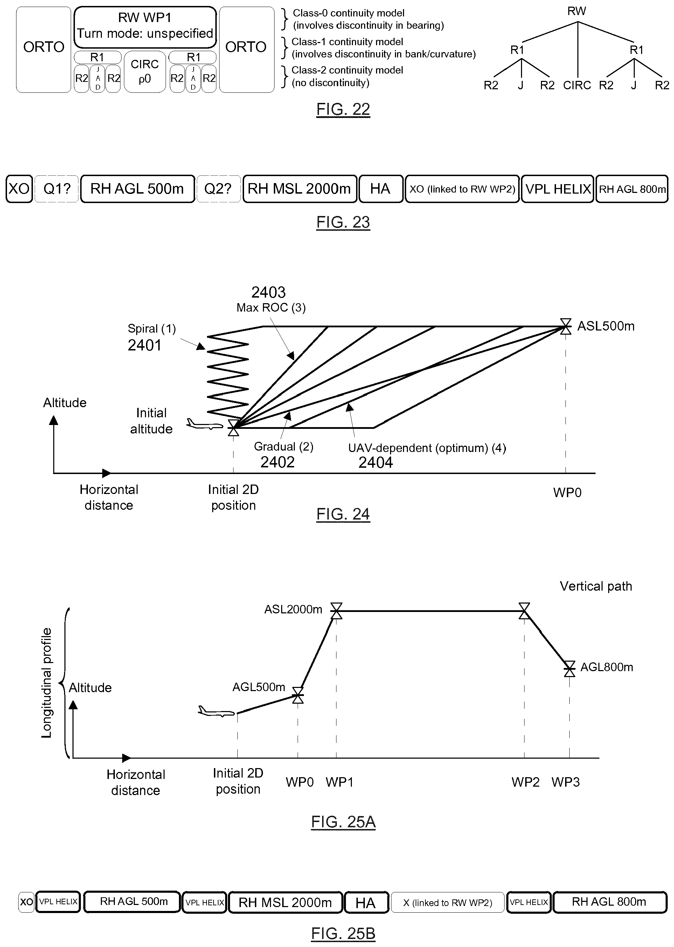

**FIG. 22** schematically illustrates bridges in AIDL. A bridge waypoint trigger represents multiple (nested) levels of detail simultaneously. According to AIDL, patterns that represent nested level of detail simultaneously are called bridges since lower fidelity models "bridge" over higher fidelity ones.

In effect, a satellite view of the trajectory might look like a sequence of connected straight legs (ORTOs) when the connections between consecutive legs are seen roughly as vertexes. When zooming into each vertex, one can see that it splits into two R1 points defining a piece of circular arc that the inbound and outbound legs are tangent at. Finally, when further zooming is applied into such R1 points each one splits in two R2 points and the much smaller J piece adapting curvature can be seen. Thus, trigger RW WP0 bridges over the trigger-instruction-trigger pattern {R1,CIRC,R1}, where each R1 trigger itself bridges over another trigger-instruction-trigger pattern {R2,J,R2}.

**FIG. 23** shows in AIDL model, the vertical path of the intended trajectory defined by STANAG-4586. The first uncertainty found (Q1) comes associated with the (unknown) guidance/control law needed to perform the climb from the altitude at the moment of issuing the NAV-TO command (captured by the X0 trigger) up to the altitude constraint associated with WP0 (captured by the trigger RH AGL 500 m).

**FIG. 24** exemplifies uncertainty associated with a missing longitudinal instruction. There are many (in principle, infinite) ways of performing an altitude change. However, there are just four ways that can be captured by STANAG-4586 WP primitives. In effect, only the *Gradual* (assuming it means linear altitude change) and *Max ROC* (Rate of Climb) modes selectable for the *Altitude Change Behavior* attribute convey enough information as to determine the equivalent guidance/control laws required to close the corresponding DOF beforehand. They are respectively coded in STANAG-4586 with value 2 for Gradual mode **2402** and with value 3 for Max ROC mode **2403.** Spiral mode **2401** with value 1 and UAV-dependent mode **2404** with value 4 would require additional information or, otherwise, the IG process should have to fill in the gaps on its own, plus there are many other climb strategies that make operational sense, depending on the situation, besides the four that STANAG-4586 is able to capture.

**FIG. 25A** illustrates an AIDL longitudinal profile model. **FIG. 25B** is a graphical representation of the corresponding vertical profile.

As it concerns to this example, the *Altitude Change Behavior* attribute for this leg has been set to code 5, which means, it has been left unspecified. Thus, an additional IG configuration parameter to consider may be the default choice when no details are provided on how to perform a climb in between two given altitudes. The simplest AIDL instruction that complies with such constraints is the aforementioned Vertical Path Law (VPL) instruction called HELIX, which happens to match the expected behavior associated to *Altitude Change Behavior* attribute set to 2 (Gradual).

The remaining unknown (Q2) can be solved exactly in the same way explained for Q1. With that, AIDL model for the longitudinal profile becomes completely defined. In this example, as all longitudinal instructions belong to either Vertical Path Guidance or Altitude Guidance groups, the vertical geometry of the trajectory being modeled is geometrically defined. Therefore, it can be computed beforehand and is independent from the AV performance/response or atmospheric conditions, excluding exceptions such as if required ROC/ROD exceed performance limitations or e.g. head/tail wind combined with the control exerted in the propulsive profile make it impossible to follow the modeled vertical geometry, which can only be asserted in execution or with the help of a trajectory prediction capability.

**FIG. 26** is an AIDL representation of the propulsive profile model. The first uncertainty **2601** found in that profile (Q1) comes associated with an unknown guidance/control law to adapt the speed from the value reached upon arrival to WP0 to the speed constraint given at WP1 (captured by the trigger RS TAS 70 kt).

Again, there are many speed guidance strategies that could fit the required speed evolution. The simplest one (as long as only class 1 continuity is required for the propulsive profile) being a linear variation. AIDL models it as the so-called Speed Law (SL) with the specifier [ramp]. Thus, another IG configuration parameter may be the default choice of SL [ramp] when speed needs to be adjusted within a leg in between two required values.

Regarding the second unknown **2602** found in the propulsive profile (Q2), the subsequent trigger represents a time constraint, which tells the IG process that a Time Guidance strategy is necessary. Time guidance is based on controlling speed/thrust so the AV arrives to the WP at the time required by the given time contraint. AIDL provides several Time Law (TL) instructions, the simplest one for the case when only class-1 continuity is required again being the TL with specifier [ramp]. The last IG configuration parameter found could be the default choice of TL [ramp] when time constraints have to be met over a leg.

**FIG. 27A** graphically illustrates an AIDL propulsive profile of speed/throttle vs. time. **FIG. 27B** is the associated representation in AIDL terms.

AIDL model for the propulsive profile is completely defined. Notice that either thrust control, speed guidance or time guidance are exerted at a time (consistently with the AIDL grammar rules).

As a result, the entire AIDL model turns from representing flight intent to representing aircraft intent, which now univocally determines the AV trajectory.

**FIG. 28** shows the final AIDL aircraft intent model. HIFI AIDL model generated throughout the IG process explained already contains much more specific details on how the motion is determined than the original STANAG-4586 model. However, even much more fidelity might have been generated, should a different requirement for continuity of state variables have been set. For instance, while the lateral profile has been designed so class-2 (continuity of bank/curvature) is achieved, the vertical profile has only been required class-0 (continuity of geometry) and the propulsive profile has only been required class-1 (continuity of the magnitude of the speed).

**FIG. 29** is a table for the IG configuration parameters identified throughout the intent generation process described above.

As shown, AIDL has much more expressivity than STANAG-4586; in fact, the set of trajectory models that can be built with STANAG-4586 primitives is a subset of the ones that can be built with AIDL.

The discussion above can be made extensive to all existing trajectory definition mechanisms in nowadays like ARINC-424, ARINC-702A, ASTERIX, FIXM, ADS-B, TCAS/ACAS X, etc. Trajectory requirements is typically handled in terms of constrains/objectives to be met. Usually, trajectory definition in current standards include 2D/3D waypoints and some sort of lateral path primitives, altitude/speed/time constrains, cost index, etc., yet they fail to capture 100% of the details of the resulting AV trajectories. In other words, none of them describe the aircraft intent or the operational recipe that univocally determines the AV trajectory understood as the predicted or exhibited history of the (6-DOF) pose of the AV over time.

The present teachings promote an easily integration of HIFI trajectory definitions and AIDL with minor or no modifications to the existing systems. As exemplified, many different areas like aircraft trajectory planning, prediction and control, trajectory synchronization may benefit from AIDL while taking into account interoperability and expanding capabilities of existing systems.

## Claims

1. A computer-implemented method for communicating high fidelity (HIFI) trajectory-related information of an aerial vehicle (AV) over a conventional flight plan protocol (322), the method comprising:
- obtaining, from a first entity, a flight intent (300) containing low fidelity (LOFI) trajectory-related information;
- obtaining intent generation (IG) configuration parameters (301) defining constraints and/or objectives supplementary to the flight intent (300), containing HIFI trajectory-related information for closing all degrees of freedom of the AV's motion and configuration,
- encoding, using the conventional flight plan protocol (108), LOFI trajectory-related information from the flight intent (300) and IG configuration parameters (301) as a flight plan (305) and user-defined fields (306) available for information exchange;
- sending, to a second entity, the flight plan (305) and user-defined fields (306).

2. The computer-implemented method of claim 1, wherein LOFI trajectory-related information in the flight intent (300) is enriched by enabling and running, in both entities, an intent generation process to replicate at least a group of IG configuration parameters (301) defining constraints and/or objectives supplementary to the flight intent (300).

3. The computer-implemented method of claim 1 or 2, wherein it further comprises generating the IG configuration parameters (301) and the flight intent (300) from an aircraft intent (314) defining a unique AV trajectory.

4. The computer-implemented method of any of claims 1 to 3, wherein STANDARD AIRCRAFT TRAJECTORY CONVENTIONS are expressed using one among the following CONVENTIONS: ARIC702A, TCAS/ACAS X, CPDLC, ASTERIX, ADS-B and STANAG-4586 and wherein HIFI trajectory-related information is expressed in AIDL.

5. The computer-implemented method of any of claims 1 to 4, wherein, the first or second entity is selected among a GCS (510) or an autopilot (520) in UAS domain and an ATC (804) or an AV (801) in a ATM environment.

6. A system for communicating high fidelity (HIFI) trajectory-related information of an AV through standard aircraft trajectory conventions (322), the system comprising:
- a flight intent encoder (302) configured to obtain, from a first entity, a flight intent (300) containing low fidelity (LOFI) trajectory-related information and IG configuration parameters (301) defining constraints and/or objectives supplementary to the flight intent (300), wherein IG configuration parameters (301) contain HIFI trajectory-related information for closing all degrees of freedom of the AV's motion and configuration;
- the flight intent encoder (302) further configured to encode, using the conventional flight plan protocol (322), LOFI trajectory-related information from the flight intent (300) and IG configuration parameters (301) as a flight plan (305) and user-defined fields (306) available for information exchange;
- the flight intent encoder (302) further configured to send, to a second entity, the flight plan (305) and user-defined fields (306).

7. The system of claim 6, wherein it is further configured to enrich LOFI trajectory-related information in the flight intent (300) by enabling and running, in the second entity, an intent generation process to replicate at least a group of IG configuration parameters (301) defining constraints and/or objectives supplementary to the flight intent (300).

8. The system of claim 6 or 7, further comprising an intent generation infrastructure (323) configured to generate the IG configuration parameters (301) and the flight intent (300) from an aircraft intent (314) defining a unique AV trajectory.

9. The system of any of claims 6 to 8, wherein standard aircraft trajectory conventions are expressed using one among the following conventions: ARIC702A, TCAS/ACAS X, CPDLC, ASTERIX, ADS-B and STANAG-4586 and wherein HIFI trajectory-related information is expressed in AIDL.

10. A computer-implemented method for communicating high fidelity (HIFI) trajectory-related information of an AV through standard aircraft trajectory conventions (322), the method comprising:
- receiving, from a first entity, a flight plan (307) and user-defined fields (308) for additional information exchange in the conventional flight plan protocol (322);
- decoding the flight plan (307) and user-defined fields (308) and recovering a flight intent (312) containing LOFI trajectory-related information and IG configuration parameters (313) defining constraints and/or objectives supplementary to the flight intent (312), so that the IG configuration parameters (313) contain HIFI trajectory-related information for closing all degrees of freedom of the AV's motion and configuration.

11. The computer-implemented method of claim 10, wherein it further comprises generating an aircraft intent (324) from the recovered the flight intent (313) and configuration parameters (312).

12. The computer-implemented method of claim 11 or 12, wherein LOFI trajectory-related information in the flight intent (313) is enriched by enabling and running, in the both entities, an intent generation process to replicate at least a group of IG configuration parameters (311) defining constraints and/or objectives supplementary to the flight intent (313).

13. A system for communicating high fidelity (HIFI) trajectory-related information of an AV through standard aircraft trajectory conventions (322), the system comprising:
- a flight intent decoder (309) configured to receive, from a second entity, a flight plan (307) and user-defined fields (308) for additional information exchange in the conventional flight plan protocol (322);
- the flight intent decoder (309) further configured to decode the flight plan (307) and user-defined fields (308) and to recover a flight intent (312) containing LOFI trajectory-related information and IG configuration parameters (313) defining constraints and/or objectives supplementary to the flight intent (312), so that the IG configuration parameters (313) contain HIFI trajectory-related information for closing all degrees of freedom of the AV's motion and configuration.

14. The system of claim 13, wherein it is further configured to enrich LOFI trajectory-related information in the flight intent (312) by enabling and running, in the second entity, an intent generation process to replicate at least a group of IG configuration parameters (313) defining constraints and/or objectives supplementary to the flight intent (312).

15. The system of claim 13 or 14, further comprising an intent generation infrastructure (323) configured to generate an aircraft intent (324) defining a unique AV trajectory from the IG configuration parameters (301) and the flight intent (300).
